# EUROPÄISCHE PATENTSCHRIFT

(11) **EP 2 717 278 B1**
(45) Veröffentlichungstag und Bekanntmachung des Hinweises auf die Patenterteilung: **14.01.2015**
(21) Anmeldenummer: 13187056.0
(22) Anmeldetag: 02.10.2013
(51) Int. Cl.: H01F 6/00, H01F 6/06, H02H 9/02

(54) **Induktiver Fehlerstrombegrenzer mit geteilter Sekundärspulenanordnung**
Inductive fault current limiter with split secondary coil assembly
Limiteur de courant de défaut inductif avec agencement de bobine secondaire séparé

(30) Priorität: 05.10.2012 DE 102012218260
(43) Veröffentlichungstag der Anmeldung: 09.04.2014
(73) Patentinhaber: Bruker HTS GmbH, 63450 Hanau (DE)
(72) Erfinder: Schlenga, Klaus, 76351 Linkenheim-Hochstetten (DE); Usoskin, Alexander, 63456 Hanau (DE)
(74) Vertreter: Kohler Schmid Möbus

(56) Entgegenhaltungen:
- EP-A1- 2 402 961
- DE-A1- 19 524 579
- FR-A1- 2 691 591
- US-A- 5 379 020

## Beschreibung

Die Erfindung betrifft einen induktiven Fehlerstrombegrenzer, umfassend
- eine normalleitende Primärspulenanordnung mit einer Vielzahl von Windungen, und
- eine supraleitende, kurzgeschlossene Sekundärspulenanordnung, wobei die Primärspulenanordnung und die Sekundärspulenanordnung zumindest im Wesentlichen koaxial zueinander und zumindest teilweise ineinander geschachtelt angeordnet sind.

Ein solcher induktiver Fehlerstrombegrenzer ist aus der EP 2 402 961 A1 bekannt geworden.

Fehlerstrombegrenzer werden eingesetzt, um im Falle von Kurzschlüssen den aus einer Quelle gezogenen Strom zu beschränken. Mit supraleitenden Fehlerstrombegrenzern können auch vergleichsweise hohe Stromstärken, etwa in öffentlichen elektrischen Versorgungsnetzen, besichert werden.

Supraleitende Fehlerstrombegrenzer vom Gleichstromtyp umfassen z. B. einen supraleitenden Leitungsabschnitt, durch welchen der zu begrenzende Strom fließt. Steigt die Stromstärke infolge eines Kurzschlusses an, wird der kritische Strom im supraleitenden Leitungsabschnitt überschritten, so dass dieser normalleitend wird ("Quench"), wodurch sich der Widerstand stark erhöht. Dadurch sinkt die Stromstärke, die durch den Leitungsabschnitt fließt, entsprechend ab. Diese Art der Strombegrenzer wird auch als resistiver Typ bezeichnet.

Supraleitende Fehlerstrombegrenzer für Wechselstromanwendungen können sowohl als resistive als auch induktive Fehlerstrombegrenzer ausgeführt werden. Induktive Fehlerstrombegrenzer werden im Wesentlichen durch induktiv gekoppelte Windungen ausgebildet. Durch eine normalleitende Primärspulenanordnung ("Primärseite") fließt hierbei der zu begrenzende Wechselstrom, und in einer supraleitenden Sekundärspulenanordnung ("Sekundärseite") wird ein Strom induziert, der dem magnetischen Fluss, welcher durch den Strom in der Primärspulenanordnung erzeugt wird, entgegenwirkt. Dadurch wird die Induktivität der Primärspulenanordnung weitgehend aufgehoben. Steigt der zu begrenzende Wechselstrom in der Primärspulenanordnung infolge eines Kurzschlusses an, so erhöht sich auch der induzierte Strom in der Sekundärspulenanordnung, bis der kritische Strom in der Sekundärspulenanordnung überschritten ist und die Sekundärspulenanordnung normalleitend wird ("Quench"). Im normalleitenden Zustand der Sekundärspulenanordnung kompensiert deren Strom nur noch einen geringen Teil des magnetischen Flusses der Primärspulenanordnung, wodurch wiederum die Induktivität der Primärspulenanordnung ansteigt. Diese Erhöhung des induktiven Widerstands begrenzt den Strom durch die Primärspulenanordnung.

Aus der EP 2 402 961 A1 ist ein induktiver Fehlerstrombegrenzer bekannt geworden, bei dem radial innerhalb der Primärspule umfassend mehrere Windungen eine Sekundärspule, die als supraleitender, kurzgeschlossener Ring ausgebildet ist, eingestellt ist. Aus der DE 10 2010 007 087 A1 ist ein induktiver Fehlerstrombegrenzer bekannt geworden, bei dem innerhalb einer Primärspule ein Kryostat mit einer Sekundärspule angeordnet ist. Aus der DE 196 28 358 C1 (sowie aus der US 5 140 290 A, US 6 795 282 B2, US 7 586 717 B2, US 5 694 279 A, DE 195 24 579 A1, US 5 379 020 A) ist es bekannt geworden, eine Primärspule und eine Sekundärspule nebeneinander anzuordnen und über einen ringförmigen Eisenkern zu koppeln.

Die Effizienz eines induktiven Fehlerstrombegrenzers bemisst sich nach dem Induktivitätsverhältnis der Primärspulenanordnung bei einerseits supraleitender Sekundärspulenanordnung ("Normalbetrieb") und andererseits normalleitender Sekundärspulenanordnung ("Fehlerbetrieb"). Im Fehlerbetrieb soll der Strom in der Primärspulenanordnung möglichst stark gegenüber dem Normalbetrieb reduziert werden, entsprechend einem hohen Induktivitätsverhältnis.

Weiter wird auf FR 2 691 591 A1 verwiesen, welches die Merkmale des Oberbegriffs von Anspruch 1 offenbart.

### Aufgabe der Erfindung

Der Erfindung liegt die Aufgabe zugrunde, einen Fehlerstrombegrenzer mit erhöhtem Induktivitätsverhältnis zur Verfügung zu stellen.

### Kurze Beschreibung der Erfindung

Diese Aufgabe wird gelöst durch einen induktiven Fehlerstrombegrenzer der eingangs genannten Art, der dadurch gekennzeichnet ist,
dass die Sekundärspulenanordnung eine erste Spulensektion und eine zweite Spulensektion umfasst,
wobei die erste Spulensektion der Sekundärspulenanordnung radial innerhalb der Windungen der Primärspulenanordnung angeordnet ist,
und wobei die zweite Spulensektion der Sekundärspulenanordnung radial außerhalb der Windungen der Primärspulenanordnung angeordnet sind.

Gemäß der Erfindung wird die Sekundärspulensektion radial in (zumindest) zwei Spulensektionen aufgeteilt, und die Primärspulenanordnung wird radial zwischen diesen zwei Spulensektionen der Sekundärspulenanordnung angeordnet.

Für eine hohe Effizienz eines induktiven Fehlerstrombegrenzers muss im Normalbetrieb der magnetische Fluss der Primärspulenanordnung möglichst vollständig durch den in der Sekundärspulenanordnung induzierten magnetischen Fluss aufgehoben werden. Dazu sollte die Sekundärspulenanordnung möglichst nahe an die Primärspulenanordnung heranrücken, was aufgrund von konstruktionstechnischen Randbedingungen, wie z. B. den Wandstärken und -abständen eines Kryostatenbehälters für die supraleitende Sekundärspulenanordnung und der endlichen radialen Ausdehnung der Spulenanordnungen, nicht einfach zu erreichen ist. Bei induktiven Fehlerstrombegrenzern für höhere Ströme (etwa in öffentlichen elektrischen Versorgungsnetzen) haben die Primärspulenanordnung und auch die Sekundärspulenanordnung eine erhebliche Dicke, so dass die Primärspulenanordnung oft deutlich von einem erheblichen Teil der Windungen der Sekundärspulenanordnung beabstandet ist und dadurch die die vollständige Kompensation der o.g. Flüsse praktisch unmöglich ist.

Durch die Aufteilung der Sekundärspulenanordnung in mehrere Spulensektionen und das Einschieben der Primärspulenanordnung kann dieser Abstand trotz größerer radialer Gesamtausdehnung effektiv verkleinert werden. Dadurch wird die Kompensation des magnetischen Flusses der Primärspulenanordnung durch die Sekundärspulenanordnung im Normalbetrieb verbessert bzw. es wird ein höheres Induktivitätsverhältnis erreicht.

Die Spulensektionen der Sekundärspulenanordnung umfassen typischerweise jeweils mindestens eine supraleitend kurzgeschlossene Leiterschleife. Die Spulensektionen der Sekundärspulenanordnung sind ebenfalls typischerweise elektrisch voneinander isoliert; die Kompensationswirkung stellt sich für die verschiedenen Spulensektionen unabhängig voneinander von selbst ein. Alternativ können die Spulensektionen der Sekundärspulenanordnung auch so verschaltet sein, dass sich deren B-Felder im inneren Bereich der radial inneren Spulensektion addieren, wobei die Spulensektionen dann in der Regel in Serie geschaltet sind. Die Windungen der Primärspulenanordnung sind typischerweise aus Kupfer gefertigt. In der Sekundärspulenanordnung können insbesondere bandförmige Supraleiter ("coated conductors") eingesetzt werden; es können aber auch Supraleiterdrähte mit Supraleiterfilamenten etwa aus Nb₃Sn, NbTi oder MgB₂ eingesetzt werden. Die Spulensektionen der Sekundärspulenanordnung sind typischerweise jeweils durch eine normalleitende Shunt-Anordnung (typischerweise in Ringform) vor einem Durchbrennen im Quenchfall geschützt; bei geeigneten Leitereigenschaften (insbesondere geeigneter Leitergeometrie) kann allerdings auch auf eine Shuntanordnung verzichtet werden (falls gewünscht beispielsweise oft bei einer aus Bandleiter gefertigten Einwindungsspule, für die gilt 3 ≤ U/B ≤ 10, mit U: Umfang der Spule und B: Leiterbreite). Die Spulensektionen der Sekundärspulenanordnung sind typischerweise zur Kühlung in einem gemeinsamen Kryostaten oder auch in separaten Krypostaten angeordnet; ein Kryostat kann im Rahmen der Erfindung beispielsweise mit flüssigem Helium oder flüssigem Stickstoff gekühlt werden.

### Bevorzugte Ausführungsformen der Erfindung

Bei einer vorteilhaften Ausführungsform des erfindungsgemäßen Fehlerstrombegrenzers ist die Primärspulenanordnung im Wesentlichen mittig zwischen einer Außenseite der ersten Spulensektion der Sekundärspulenanordnung und einer Innenseite der zweiten Spulensektion der Sekundärspulenanordnung angeordnet. Dadurch kann eine sehr gute Kompensation des magnetischen Flusses der Primärspulenanordnung erreicht werden. Die Primärspulenanordnung ist im Wesentlichen mittig angeordnet, wenn die radialen Abstände zwischen der Außenseite der ersten Spulensektion und der innersten Windungslage (bzw. Innenseite) der Primärspulenanordnung einerseits und zwischen der radial äußersten Windungslage (bzw. Außenseite) der Primärspulenanordnung und der Innenseite der zweiten Spulensektion andererseits sich um 20% oder weniger, bevorzugt 10% oder weniger, unterscheiden, bezogen auf den kleineren Abstand. Falls die radialen Abstände in axialer Richtung variieren, kann die obige Relation auf die durchschnittlichen radialen Abstände bezogen werden; alternativ können auch die jeweils kleinsten radialen Abstände herangezogen werden. Falls die Windungsdichte und/oder die Zahl der Windungen in den verschiedenen Spulensektionen der Sekundärspulenanordnung stark unterschiedlich ist, oder die Windungsdichte in der Primärspulenanordnung stark variiert, kann alternativ auch die Primärspulenanordnung so positioniert werden, dass der mittlere radiale Abstand zwischen den Windungen der Primärspulenanordnung und der Sekundärspulenanordnung minimiert wird.

Bei einer vorteilhaften Ausführungsform umfassen die Spulensektionen der Sekundärspulenanordnung jeweils eine oder mehrere supraleitende, ringförmig geschlossene Einwindungsspulen. Einwindungsspulen sind leicht zu fertigen, insbesondere mit bandförmigen Supraleitern; die ringförmigen Einwindungsspulen können auch ohne Joint ausgebildet werden (durch supraleitende Beschichtung eines ringförmgig geschlossenen Trägers mit Supraleitermaterial). Mehrere supraleitende Einwindungsspulen können radial ineinander oder auch axial übereinander eingesetzt werden, um eine Spulensektion der Sekundärspulenanordnung auszubilden.

Bevorzugt ist eine Ausführungsform, bei der die Sekundärspulenanordnung mehrere Windungen umfasst, die im Wesentlichen gleichmäßig auf die Spulensektionen der Sekundärspulenanordnung verteilt sind. Mit einer solchen Aufteilung kann in der Regel der radiale Abstand der am weitesten entfernten Windungen der beiden Spulensektionen der Sekundärspulenanordnung zur Primärärspulenanordnung gering gehalten werden. Die Windungen sind im Wesentlichen gleichmäßig verteilt, wenn sich die Anzahl der Windungen der Spulensektionen um 20% oder weniger, bevorzugt 10% oder weniger, bezogen auf die kleinste Anzahl, unterscheiden.

Bei einer alternativen Ausführungsform ist vorgesehen, dass die Sekundärspulenanordnung mehrere Windungen umfasst, die ungleichmäßig auf die Spulensektionen der Sekundärspulenanordnung verteilt sind. Dadurch kann die Stromverteilung in den Windungen der Spulensektionen der Sekundärspulenanordnung optimiert werden, insbesondere um die Stromtragfähigkeit des Fehlerstrombegrenzers im Normalbetrieb zu maximieren. Die Windungen sind bevorzugt so ungleichmäßig verteilt, dass sich die Anzahl der Windungen der Spulensektionen um 25% oder mehr, bevorzugt 40% oder mehr, bezogen auf die kleinste Anzahl, unterscheiden.

Vorteilhaft ist auch eine Ausführungsform, die vorsieht, dass die Sekundärspulenanordnung mehrere Windungen umfasst, die in den Spulensektionen der Sekundärspulenanordnung in radialer Richtung und/oder in axialer Richtung ungleichmäßig verteilt sind,
und/oder dass sich die Spulensektionen der Sekundärspulenanordnung in axialer Richtung unterschiedlich weit erstrecken. Auch dadurch kann die Stromverteilung in den Windungen der Spulensektionen der Sekundärspulenanordnung optimiert werden, insbesondere um die Stromtragfähigkeit des Fehlerstrombegrenzers im Normalbetrieb zu maximieren.

Besonders bevorzugt ist eine Ausführungsform, bei der die Spulensektionen der Sekundärspulenanordnung jeweils mit einer normalleitenden Shunt-Anordnung elektrisch leitend verbunden sind. Mit den Shunt-Anordnungen kann ein Durchbrennen (insbesondere Schmelzen) des Supraleiters in den Spulensektionen der Sekundärspulenanordnung im Quenchfall verhindert werden; die Shunt-Anordnung stellt einen gegenüber der gequenchten Spulensektion parallelen Strompfad mit geringem Widerstand zur Verfügung, so dass der Strom aus der Spulensektion in die Shunt-Anordnung ausgeleitet werden kann.

Bei einer vorteilhaften Weiterbildung ist vorgesehen, dass die Shunt-Anordnung der ersten Spulensektion der Sekundärspulenanordnung radial innerhalb zumindest eines Teils der ersten Spulensektion der Sekundärspulenanordnung angeordnet ist, und die Shunt-Anordnung der zweiten Spulensektion der Sekundärspulenanordnung radial außerhalb zumindest eines Teils der zweiten Spulensektion der Sekundärspulenanordnung angeordnet ist. In einer Shunt-Anordnung können im Normalbetrieb Wirbelströme induziert werden. Dadurch steigt die erforderliche Kühlleistung an und es kann auch eine merkliche Streuinduktivität der Primärspulenanordnung auftreten, wodurch das Induktivitätsverhältnis sinkt. Durch eine Positionierung der Shunt-Anordnung der ersten Spulensektion radial innerhalb der ersten Spulensektion (oder zumindest eines Teils davon) kann diese Shunt-Anordnung von der jenseitigen (hier radial weiter außen liegenden) Primärspulenanordnung abgeschirmt werden. Entsprechend kann durch eine Positionierung der Shunt-Anordnung der zweiten Spulensektion radial außerhalb der zweiten Spulensektion (oder zumindest eines Teils davon) diese Shunt-Anordnung von der jenseitigen (hier radial weiter innen liegenden) Primärspulenanordnung abgeschirmt werden. Dadurch werden Wirbelströme in den Shunt-Anordnungen minimiert. Man beachte, dass typischerweise sowohl die erste Spulensektion als auch die zweite Spulensektion der Sekundärspulenanordnung jeweils für sich mindestens einen supraleitend kurzgeschlossenen Strompfad zur Verfügung stellen.

Bevorzugt ist dabei eine Weiterbildung dieser Ausführungsform, bei der die Shunt-Anordnungen jeweils einen oder mehrere geschlossene Shuntringe aufweisen. In diesem Fall kann mittels des oder der Shuntringe im Quenchfall der Strom aus der Sekundärspulenanordnung über den gesamten Umfang übernommen werden. Der oder die Shuntringe sind meist aus bandförmigem Edelstahl gefertigt.

Vorteilhaft ist auch eine Ausführungsform, bei der die Shunt-Anordnungen jeweils eine Vielzahl von metallischen Brücken aufweisen, die die jeweilige Shunt-Anordnung mit der zugeordneten Spulensektion der Sekundärspulenanordnung elektrisch leitend verbinden. Durch eine Kontaktierung mit einzelnen Brücken kann die Ausdehnung einzelner geschützter Bereiche gezielt eingestellt werden. Meist sind über den Umfang einer Spulensektion der Sekundärspulenanordnung sechs oder mehr, bei größeren Fehlerstrombegrenzern (etwa für öffentliche elektrische Versorgungsnetze) auch zwölf oder mehr Brücken vorgesehen. Bei Einwindungsspulen aus bandförmigen Supraleitern ist bevorzugt der Abstand ABS der Brücken in Umfangsrichtung so gewählt, dass im Verhältnis zur Leiterbreite B gilt: 3 ≤ ABS/B ≤ 10. Dies beugt einem Durchbrennen des Supraleiters im Quenchfall vor.

Besonders bevorzugt ist eine Ausführungsform, bei der die Primärspulenanordnung und die Sekundärspulenanordnung zumindest im Wesentlichen rotationssymmetrisch bezüglich einer Achse, insbesondere bezüglich einer vertikalen Achse, aufgebaut sind. Dadurch werden Magnetfeldspitzen vermieden, was eine hohe Stromtragfähigkeit des Fehlerstrombegrenzers ermöglicht. Eine vertikale Ausrichtung vereinfacht den Aufbau, insbesondere aufgrund reduzierter Lagerkräfte.

Eine andere, bevorzugte Ausführungsform sieht vor, dass radial innerhalb der ersten Spulensektion der Sekundärspulenanordnung ein ferromagnetischer Kern angeordnet ist. Mit dem ferromagnetischen Kern wird der magnetische Fluss gebündelt, wodurch die Kompensation des magnetischen Flusses der Primärspulenanordnung im Normalbetrieb verbessert und das Induktivitätsverhältnis (und weiterhin auch das Impedanzverhältnis) zwischen Fehlerbetrieb und Normalbetrieb erhöht werden kann. Der ferromagnetische Kern kann mit unterschiedlichen Formen ausgebildet werden, etwa als Rohr oder Zylinder. Der Innenraum der ersten Spulensektion der Sekundärspulenanordnung kann ganz oder (bevorzugt) nur teilweise vom Kern erfüllt sein. Bei jedweder Form des ferromagnetischen Kerns kann die Anregung von Abschirmströmen im Kern durch laminierte Strukturen, Schlitze oder ähnliche geeignete Maßnahmen unterdrückt werden.

Bei einer bevorzugten Ausführungsform des erfindungsgemäßen Fehlerstrombegrenzers erstreckt sich die Sekundärspulenanordnung in axialer Richtung im Wesentlichen genauso weit wie die Primärspulenanordnung. Auch dadurch wird die Kompensation des magnetischen Flusses der Primärspulenanordnung im Normalbetrieb verbessert. Die Sekundärspulenanordnung und die Primärspulenanordnung erstrecken sich im Wesentlichen genauso weit, wenn sich die axialen Längen der Sekundärspulenanordnung und der Primärspulenanordnung um 20% oder weniger, bevorzugt 10% oder weniger, unterscheiden, bezogen auf die kleinere Länge. Falls sich die Spulensektionen einer Spulenanordnung in axialer Richtung unterschiedlich erstrecken, so bestimmt sich die Länge der Spulenanordnung aus den beiden Enden derjenigen Spulensektionen, die jeweils am weitesten auf jeder Seite in axialer Richtung herausragen.

Bevorzugt ist weiterhin eine Ausführungsform, bei der die Sekundärspulenanordnung mit einem Hochtemperatur-Supraleitermaterial, insbesondere YBCO oder BSCCO, gefertigt ist. Dadurch kann die Stromtragfähigkeit des Fehlerstrombegrenzers erhöht werden. Hochtemperatur-Supraleitermaterialien im Sinne der Erfindung sind alle Supraleitermaterialien mit einer Sprungtemperatur von 40 K oder höher.

Besonders bevorzugt ist eine Ausführungsform, die vorsieht, dass die erste und zweite Spulensektion der Sekundärspulenanordnung in einem gemeinsamen Kryostaten oder in verschiedenen Kryostaten angeordnet sind, und dass die Primärspulenanordnung, die erste und zweite Spulensektion der Sekundärspulenanordnung und der gemeinsame Kryostat oder die verschiedenen Kryostaten so platziert und dimensioniert sind, dass für die Zwischenräume ZR in radialer Richtung zwischen einander gegenüberliegenden Seiten der Primärspulenanordnung einerseits und der ersten und zweiten Spulensektionen der Sekundärspulenanordnung andererseits gilt: ZR < 1/2D_{P} + 1/2D_{SS}, bevorzugt ZR < 1/2D_{SS},
mit D_{P}: Dicke der den jeweiligen Zwischenraum ZR mit begrenzenden Primärspulenanordnung in radialer Richtung, und D_{SS}: Dicke der den jeweiligen Zwischenraum ZR mit begrenzenden Spulensektion der Sekundärspulenanordnung in radialer Richtung. Dadurch ist sichergestellt, dass die Abstandseinsparung aufgrund der Aufteilung der
Sekundärspulenanordnung nicht bereits durch die oben genannten Zwischenräume (die unter anderem durch die Wandstärke des Kryostaten bedingt sind) in erheblichem Umfang zunichtegemacht wird. Im Falle von (etwa in axialer Richtung) veränderlichen Zwischenräumen bezieht sich die Relation auf die gemittelten Zwischenräume; sie kann aber alternativ auch auf die kleinsten Zwischenräume angewandt werden. Besonders bevorzugt gilt ZR ≤ 1/2D_{P} + 1/4D_{SS} oder auch ZR ≤ 1/4D_{P} + 1/4D_{SS}. Man beachte, dass pro Primärspulenanordnung zwei Zwischenräume vorhanden sind, die den Bedingungen dieser Ausführungsform unterfallen. Man beachte weiterhin, dass verschiedene Zwischenräume ZR unterschiedlich groß sein können, und ebenso die Dicken D_{SS} verschiedener Spulensektionen der Sekundärspulenanordnung unterschiedlich groß sein können.

Vorteilhaft ist auch eine Ausführungsform, die vorsieht, dass die Sekundärspulenanordnung N Spulensektionen aufweist, mit N ∈ IN und N ≥ 3, und dass der Fehlerstrombegrenzer N-1 Primärspulenanordnungen aufweist, wobei jeweils eine Primärspulenanordnung radial zwischen zwei Spulensektionen der Sekundärspulenanordnung angeordnet ist,
insbesondere wobei N=3 oder N=4. Bei dieser Ausführungsform wird die Sekundärspulenanordnung noch feiner unterteilt, wodurch die Primärspulenanordnungen noch näher an die Windungen der Spulensektionen der Sekundärspulenanordnung heranrücken können; dadurch ist ein weiter gesteigertes Induktivitätsverhältnis möglich. Die Primärspulenanordnungen sind elektrisch so verschaltet, dass sich deren B-Felder im inneren Bereich der radial inneren Primärspulenanordnung addieren, wobei die Primärspulenanordnungen in der Regel in Serie geschaltet sind.

Bevorzugt ist auch eine Ausführungsform, bei der eine Spulensektion der Sekundärspulenanordnung, die radial zwischen zwei Primärspulenanordnungen angeordnet ist, eine Shunt-Anordnung aufweist, die sowohl radial innen als auch radial außen jeweils von einem Teil dieser Spulensektion umgeben ist. Dadurch wird diese Shunt-Anordnung gegenüber beiden benachbarten Primärspulenanordnungen durch die beiden Teile der Spulensektion der Sekundärspulenanordnung abgeschirmt, wodurch Wirbelströme vermieden werden. Typischerweise stellt jeder der beiden Teile der umgebenden Spulensektion jeweils für sich mindestens einen supraleitend kurzgeschlossenen Strompfad zur Verfügung.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische, kombinierte Schnitt- und Schrägdarstellung einer ersten Ausführungsform eines erfindungsgemäßen induktiven Fehlerstrombegrenzers;
- Fig. 2a: eine schematische Schnittdarstellung einer zweiten Ausführungsform eines erfindungsgemäßen Fehlerstrombegrenzers, mit Shunt-Anordnungen für die Spulensektionen der Sekundärspulenanordnung;
- Fig. 2b: einen Ausschnitt aus der Ausführungsform von Fig. 2a, in einer schematischen Schrägansicht;
- Fig. 3: eine schematische Schnittdarstellung einer dritten Ausführungsform eines erfindungsgemäßen Fehlerstrombegrenzers, wobei die Spulensektionen der Sekundärspulenanordnung in axialer Richtung unterteilt sind;
- Fig. 4: eine schematische Schnittdarstellung einer vierten Ausführungsform eines erfindungsgemäßen Fehlerstrombegrenzers, wobei die Sekundärspulenanordnung drei radial beabstandete Spulensektionen aufweist, zwischen denen zwei Primärspulenanordnungen angeordnet sind;
- Fig. 5: eine schematische Schnittdarstellung einer fünften Ausführungsform eines erfindungsgemäßen Fehlerstrombegrenzers, wobei die Spulensektionen der Sekundärspulenanordnung in axialer Richtung unterschiedlich lang sind.

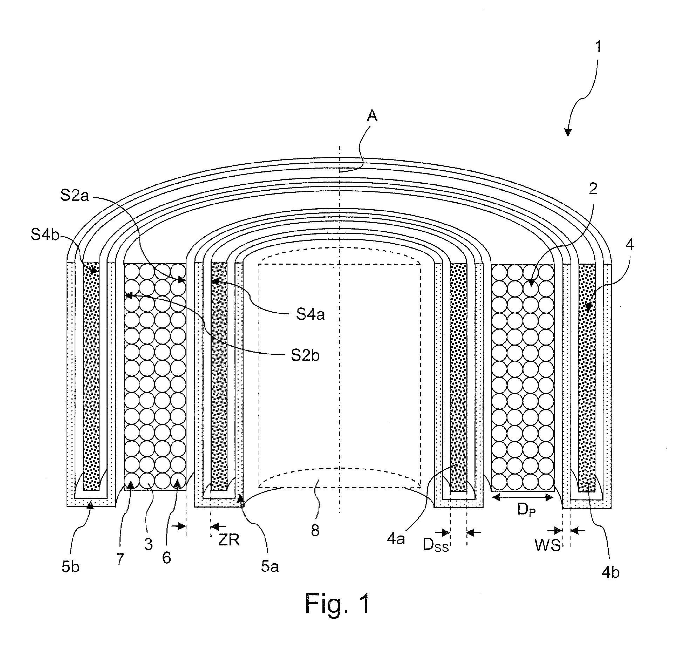

Die **Figur 1** zeigt in einer schematischen Darstellung einen Schnitt durch eine Ausführungsform eines erfindungsgemäßen Fehlerstrombegrenzers 1.

Der Fehlerstrombegrenzer 1 ist im Wesentlichen rotationssymmetrisch bezüglich einer vertikalen Achse A aufgebaut. Er umfasst eine normalleitende Primärspulenanordnung 2 mit einer Vielzahl von Windungen 3, wobei im gezeigten Ausführungsbeispiel die Primärspulenanordnung 2 vier Lagen von Windungen 3 umfasst. Radial innerhalb der Primärspulenanordnung 2 ist eine erste Spulensektion 4a einer supraleitenden Sekundärspulenanordnung 4 angeordnet, und radial außerhalb der Primärspulenanordnung 2 ist eine zweite Spulensektion 4b der supraleitenden Sekundärspulenanordnung 4 angeordnet. Die Primärspulenanordnung 2 und die Sekundärspulenanordnung 4 sind bezüglich der Achse A koaxial ausgerichtet und in axialer Richtung gleich lang; es genügt allerdings, wenn diese Orientierung bzw. diese Abmessungen im Wesentlichen eingehalten werden (etwa mit einer gegenseitigen Verkippung bis zu 5°, oder einem axialen Überstand der Sekundär- oder Primärspulenanordnung insgesamt um bis zu 20%).

Die beiden Spulensektionen 4a, 4b der Sekundärspulenanordnung 4 sind jeweils in einem Kryostaten 5a, 5b angeordnet, deren Innenräume in nicht näher dargestellter Weise gekühlt werden (beispielsweise mit flüssigem Stickstoff auf 77 K), so dass die Sekundärspulenanordnung 4 bei einer Temperatur ist, die unterhalb der Sprungtemperatur des verwendeten Supraleitermaterials ist. Die Spulensektionen 4a, 4b umfassen im einfachsten Fall jeweils nur eine supraleitend kurzgeschlossene Einwindungsspule; alternativ können die Spulensektionen 4a, 4b auch mit mehreren Windungen (ggf. auf mehrere Windungslagen verteilt) ausgebildet sein, etwa solenoidförmig gewickelt. Die Windungen der Sekundärspulenanordnung 4 sind einzeln und/oder in Gruppen (insbesondere entsprechend den Spulensektionen) oder zusammen supraleitend kurzgeschlossen.

Falls gewünscht, kann im Inneren der ersten Spulensektion 4a ein Eisenkern 8 (gestrichelt angedeutet) vorgesehen sein. Der Eisenkern 8 füllt typischerweise nur eine Teil des Innenraums der ersten Spulensektion 4a aus; insbesondere kann der Eisenkern 8 hohl (etwa rohrähnlich) ausgebildet sein.

Die Primärspulenanordnung 2 ist hier mittig zwischen der Außenseite S4a der ersten Spulensektion 4a und der Innenseite S4b der zweiten Spulensektion 4b der Sekundärspulenanordnung 4 angeordnet.

Ein in radialer Richtung gemessener Zwischenraum ZR zwischen den einander zugewandten, gegenüberliegenden Seiten S4a (Außenseite der ersten Spulensektion 4a) und S2a (Innenseite der Primärspulenanordnung 2, vgl. innerste Windungslage 6) entspricht hier etwa 3/5 der Summe der halbierten Dicke D_{SS} der ersten Spulensektion 4a der Sekundärspulenanordnung 4 und der halbierten Dicke D_{P} der Primärspulenanordnung 2. Der Zwischenraum ZR wird im Wesentlichen durch die (gesamte) Wandstärke WS des Kryostaten 5 und die Abstände der ersten Spulensektion 4a und der Primärspulenanordnung 2 vom Kryostaten 5a bestimmt.

Gleiches gilt hier für einen Zwischenraum zwischen der zweiten Spulensektion 4b (vgl. Innenseite S4b) und der Primärspulenanordnung 2 (vgl. Außenseite S2b) (nicht näher dargestellt). Man beachte, dass in der schematischen Darstellung die radialen Abstände zwischen den Außenwänden der Kryostaten 5a, 5b und der Primärspulenanordnung 2 und auch die radialen Abstände zwischen der den Spulensektionen 4a, 4b der Sekundärspulenanordnung 4 und den Innenwänden der Kryostaten 5a, 5b vergrößert dargestellt sind.

Durch die erfindungsgemäße radiale Aufteilung der Sekundärspulenanordnung 4 und der Platzierung der Primärspulenanordnung 2 radial zwischen den Spulensektionen 4a, 4b der Sekundärspulenanordnung 4 kann der radiale Abstand zwischen der Sekundärspulenanordnung 4 und der am weitesten entfernten Windungslage der Primärspulenanordnung 2 verglichen mit einer herkömmlichen Anordnung der Sekundärspulenanordnung radial innerhalb oder radial außerhalb der Primärspulenanordnung deutlich reduziert werden.

Man beachte, dass eine erfindungsgemäße zweigeteilte Sekundärspulenanordnung an einem vorhandenen, herkömmlichen induktiven Fehlerstrombegrenzer relativ einfach nachgerüstet werden kann, indem die noch fehlende Spulensektion der Sekundärspulenanordnung ergänzt wird.

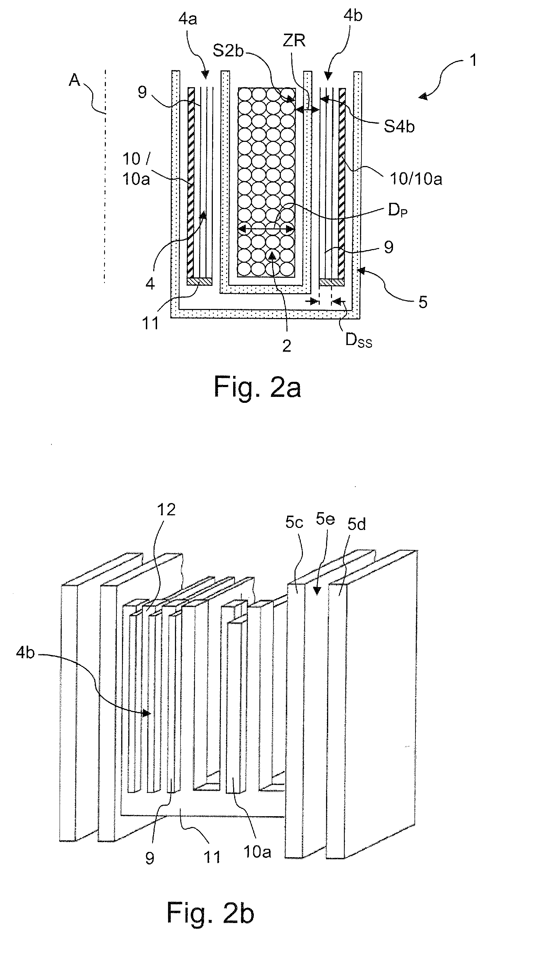

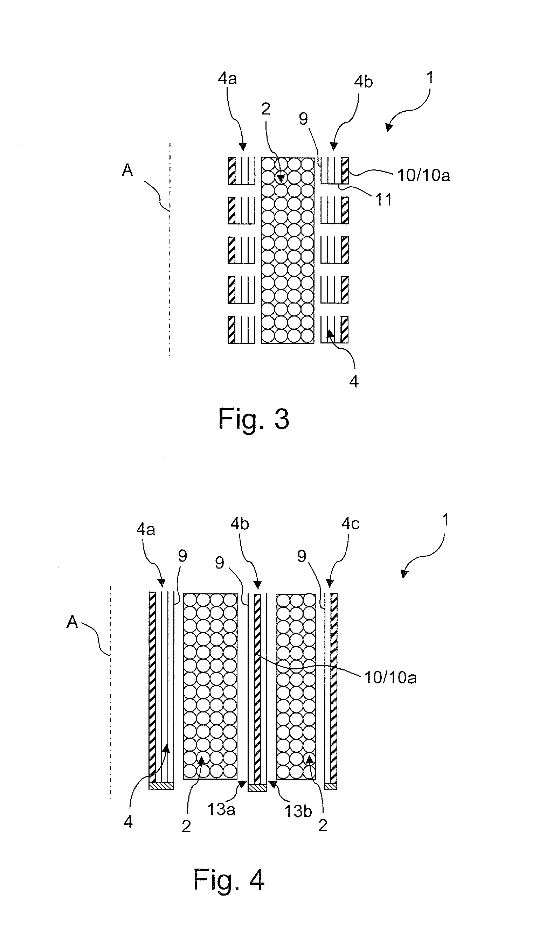

In der **Figur 2a** ist schematisch eine zweite Ausführungsform eines erfindungsgemäßen Fehlerstrombegrenzers 1 dargestellt. Zur Vereinfachung ist nur eine Hälfte der Schnittansicht gezeigt (gilt auch für die Figuren 3, 4 und 5). Es werden vor allem die Unterschiede zur vorhergehenden Ausführungsform erläutert.

Bei dieser Ausführungsform sind die Spulensektionen 4a, 4b der Sekundärspulenanordnung 4 in einem gemeinsamen Kryostaten 5 angeordnet. Jede Spulensektion 4a, 4b umfasst hier drei ineinander angeordnete Einwindungsspulen 9. Entsprechend sind die hier insgesamt sechs Windungen der Sekundärspulenanordnung 4 gleichmäßig auf die beiden Spulensektionen 4a, 4b verteilt. Auf der jeweils von der Primärspulenanordnung 2 abgewandten Seite der Spulensektionen 4a, 4b ist jeweils eine normalleitende Shunt-Anordnung 10 platziert, die hier jeweils einen einzigen, geschlossenen Shuntring 10a umfasst. Die Einwindungsspulen 9 beider Spulensektionen 4a, 4b sind über in Umfangsrichtung verteilte Brücken 11 elektrisch und thermisch miteinander und mit dem Shuntring 10a verbunden.

Der Bereich einer solchen Brücke 11 bei der zweiten Spulensektion 4b ist im Ausschnitt der **Figur 2b** in schematischer Schrägansicht besonders gut zu erkennen. Die Brücke 11 bildet rechenartige Klemmhalterungen 12 für die Einwindungsspulen 9 und den Shuntring 10a aus. Der Kryostat 5 ist hier mit einer Doppelwand 5c, 5d und dazwischenliegendem, evakuierten Kryoisolationsbereich 5e ausgebildet. Der Shuntring 10a der zweiten Spulensektion 4b ist durch die supraleitenden Einwindungsspulen 9 der Sekundärspulenanordnung 4 im Normalbetrieb magnetisch nach radial innen von der Primärspulenanordnung 2 abgeschirmt. Entsprechendes gilt für den Shuntring 10a der Spulensektion 4a (siehe Fig. 2a), der nach radial außen durch die Einwindungsspulen 9 der ersten Spulensektion 4a von der Primärspulenanordnung 2 abgeschirmt ist.

In der in Fig. 2a gezeigten Ausführungsform entspricht der radiale Zwischenraum ZR etwa 7/10 der Summe der halben Dicke D_{SS} der zweiten Spulenanordnung 4b der Sekundärspulenanordnung 4 und der halben Dicke D_{P} der Primärspulenanordnung 2, bezogen auf deren gegenüberliegende, einander zugewandte Seiten S2b, S4b; man beachte, dass die Dicke D_{SS} der Spulensektion 4b nur durch deren supraleitende Windungen, also die Einwindungsspulen 9, nicht aber durch den Shuntring 10a bestimmt wird. Gleiches gilt hier für den Zwischenraum zwischen der ersten Spulensektion 4a der Sekundärspulenanordnung 4 und der Primärspulenanordnung 2 (nicht näher dargestellt).

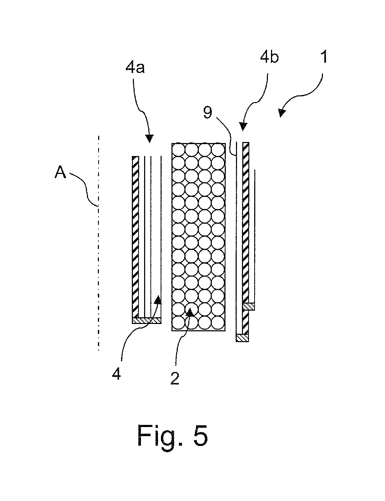

Die **Figur 3** zeigt eine dritte Ausführungsform eines erfindungsgemäßen Fehlerstrombegrenzers 1. Zur Vereinfachung wurde ein Kryostat bzw. Krypostaten für die Sekundärspulenanordnung 4 in der Darstellung weggelassen (gilt auch für die Figur 4 und Figur 5). Es werden nur die wesentlichen Unterschiede zur Ausführungsform von Fig. 2a erläutert.

Bei dieser Ausführungsform sind die Spulensektionen 4a, 4b der Sekundärspulenanordnung 4 und die zugehörigen Shunt-Anordnungen 10 in mehrere axiale Ebenen (hier fünf Ebenen) unterteilt, vgl. die vertikale Achse A. In jeder Ebene sind für jede Spulensektion 4a, 4b jeweils ein Shuntring 10a, drei Einwindungsspulen 9 und eine Brücke 11 vorgesehen.

Durch die axiale Unterteilung können auch bei axial ausgedehnten Fehlerstrombegrenzern (etwa im Bereich von 1-2 m axiale Höhe und mehr) bandförmige Supraleiter mit üblichen Leiterbreiten (meist um 1 cm bis 4 cm, in axialer Richtung) eingesetzt werden; in der Praxis sind meist zehn oder mehr, oft auch vierzig oder mehr Ebenen vorgesehen.

**Figur 4** zeigt eine Ausführungsform eines erfindungsgemäßen Fehlerstrombegrenzers 1, bei dem die Sekundärspulenanordnung 4 insgesamt drei Spulensektionen 4a, 4b, 4c aufweist. Zwischen der radial innersten Spulensektion 4a und der radial mittleren Spulensektion 4b und auch zwischen der radial mittleren Spulensektion 4b und der radial äußeren Spulensektion 4c ist jeweils eine Primärspulenanordnung 2 angeordnet.

Die radial innerste Spulensektion 4a weist hier drei ineinander geschachtelte Einwindungsspulen 9 auf, die radial mittlere Spulensektion 4b weist zwei Einwindungsspulen 9 auf, und die radial äußerste Spulensektion 4c weist nur eine Einwindungsspule 9 auf. Die Einwindungsspulen 9 stellen jeweils einen supraleitend geschlossenen Strompfad zur Verfügung. Eine Shuntanordnung 10 mit einem Shuntring 10a für die radial mittlere Spulensektion 4b der Sekundärspulenanordnung 4 ist hier radial zwischen den beiden Einwindungsspulen 9 dieser Spulensektion 4b angeordnet, so dass jeweils ein Teil 13a, 13b der Spulensektion 4b (hier jeweils eine Einwindungsspule 9) radial zwischen diesem Shuntring 10a und den radial innen und außen benachbarten Primärspulenanordnungen 2 platziert ist. Dadurch wird eine zweiseitge Abschirmung erreicht, und die Induktion von Wirbelströmen im Shuntring 10a der mittleren Spulensektion 4b wird minimiert. Man beachte, dass auch mehrere, ineinander geschachtelte Shuntringe eingesetzt werden können, etwa um die radial innere Einwindungsspule 9 und die radial äußere Einwindungsspule 9 separat mit Shuntwiderständen zu schützen.

Man beachte weiterhin, dass die Primärspulenanordnungen 2 jeweils eine unterschiedliche Zahl von Windungslagen (hier vier und drei) aufweisen, wobei nach radial außen die Zahl der Windungslagen je Primärspulenanordnung 2 abnimmt. In der Praxis sind im Rahmen der Erfindung im Allgemeinen meist dreißig oder mehr, oft sechzig oder mehr Windungslagen in einer Primärspulenanordnung 2 vorgesehen, und die Primärspulenanordnungen (bzw. deren Windungslagen) haben eine merkliche radiale Dicke, meist 6 cm und mehr, oft 15 cm und mehr. Die Primärspulenanordnungen 2 sind hier in Serie miteinander verschaltet (nicht näher dargestellt).

**Figur 5** zeigt eine Ausführungsform eines erfindungsgemäßen Fehlerstrombegrenzers 1, bei der die radial innere, erste Spulensektion 4a der Sekundärspulenanordnung 4 gegenüber der Primärspulenanordnung 2 und der zweiten, radial äußeren Sekundärspulensektion 4b der Sekundärspulenanordnung 4 verkürzt ist. Dadurch kann eine günstige relative Magnetfeldrichtung zur Oberfläche der Einwindungsspulen 9 der Sekundärspulenanordnung 4 erreicht werden. Man beachte, dass die Länge der Spulensektionen 4a, 4b oder Teilen davon auch über eine unterschiedliche Ebenenzahl für Einwindungsspulen (vgl. Fig. 3) bestimmt werden kann.

Für eine Magnetfeldoptimierung sind die radialen Abstände zwischen den Einwindungsspulen 9 der ersten Spulensektion 4a ungleich (der innere Abstand ist kleiner als der äußere Abstand); die Windungen der Sekundärspulenanordnung 4 sind hier also in radialer Richtung ungleichmäßig verteilt.

Weiterhin sind die beiden Einwindungsspulen 9 der zweiten Spulensektion 4b in axialer Richtung unterschiedlich lang ausgebildet; insofern sind die Windungen der Sekundärspulenanordnung 4 hier in axialer Richtung ungleichmäßig verteilt. Die weiter innen liegende Einwindungsspule 9 ist genauso lang wie die Primärspulenanordnung 2; diese sich nach oben und unten am weitesten erstreckende Einwindungsspule 9 bestimmt die Länge der Sekundärspulenanordnung 4 insgesamt. Die weiter außen liegende Einwindungsspule 9 ist um ca. 30% gegenüber der weiter innen liegenden Einwindungsspule 9 verkürzt; dadurch kann ebenfalls der Magnetfeldverlauf des Fehlerstrombegrenzers 1 optimiert werden.

Ein erfindungsgemäßer induktiver Fehlerstrombegrenzer kann dazu eingesetzt werden, bei Betriebsstörungen (etwa Kurzschlüssen) einen Stromanstieg in einer zu sichernden Stromleitung, in der Wechselstrom transportiert wird, zu begrenzen oder zu verhindern. Die Stromleitung kann insbesondere zu einem öffentlichen elektrischen Versorgungsnetz gehören oder auch in einem Umspannwerk angeordnet sein.

## Patentansprüche

1. Induktiver Fehlerstrombegrenzer (1), umfassend
- eine normalleitende Primärspulenanordnung (2) mit einer Vielzahl von Windungen (3), und
- eine supraleitende, kurzgeschlossene Sekundärspulenanordnung (4), wobei die Primärspulenanordnung (2) und die Sekundärspulenanordnung (4) zumindest im Wesentlichen koaxial zueinander und zumindest teilweise ineinander geschachtelt angeordnet sind,
wobei die Sekundärspulenanordnung (4) eine erste Spulensektion (4a) und eine zweite Spulensektion (4b) umfasst, **dadurch gekennzeichnet, dass** die erste Spulensektion (4a) der Sekundärspulenanordnung (4) radial innerhalb der Windungen (3) der Primärspulenanordnung (2) angeordnet ist,
und dass die zweite Spulensektion (4b) der Sekundärspulenanordnung (4) radial außerhalb der Windungen (3) der Primärspulenanordnung (2) angeordnet ist.

2. Fehlerstrombegrenzer (1) nach Anspruch 1, **dadurch gekennzeichnet, dass** die Primärspulenanordnung (2) im Wesentlichen mittig zwischen einer Außenseite (S4a) der ersten Spulensektion (4a) der Sekundärspulenanordnung (4) und einer Innenseite (S4b) der zweiten Spulensektion (4b) der Sekundärspulenanordnung (4) angeordnet ist.

3. Fehlerstrombegrenzer (1) nach einem der vorhergehenden Ansprüche, **dadurch gekennzeichnet, dass** die Spulensektionen (4a, 4b) der Sekundärspulenanordnung (4) jeweils eine oder mehrere supraleitende, ringförmig geschlossene Einwindungsspulen (9) umfassen.

4. Fehlerstrombegrenzer (1) nach einem der Ansprüche 1 bis 3, **dadurch gekennzeichnet, dass** die Sekundärspulenanordnung (4) mehrere Windungen umfasst, die im Wesentlichen gleichmäßig auf die Spulensektionen (4a, 4b) der Sekundärspulenanordnung (4) verteilt sind.

5. Fehlerstrombegrenzer (1) nach einem der Ansprüche 1 bis 3, **dadurch gekennzeichnet, dass** die Sekundärspulenanordnung (4) mehrere Windungen umfasst, die ungleichmäßig auf die Spulensektionen (4a, 4b) der Sekundärspulenanordnung (4) verteilt sind.

6. Fehlerstrombegrenzer (1) nach einem der vorhergehenden Ansprüche, **dadurch gekennzeichnet,**
**dass** die Sekundärspulenanordnung (4) mehrere Windungen umfasst, die in den Spulensektionen (4a, 4b) der Sekundärspulenanordnung (4) in radialer Richtung und/oder in axialer Richtung ungleichmäßig verteilt sind,
und/oder dass sich die Spulensektionen (4a, 4b) der Sekundärspulenanordnung (4) in axialer Richtung unterschiedlich weit erstrecken.

7. Fehlerstrombegrenzer (1) nach einem der vorhergehenden Ansprüche, **dadurch gekennzeichnet, dass** die Spulensektionen (4a, 4b) der Sekundärspulenanordnung (4) jeweils mit einer normalleitenden Shunt-Anordnung (10) elektrisch leitend verbunden sind.

8. Fehlerstrombegrenzer (1) nach Anspruch 7, **dadurch gekennzeichnet, dass** die Shunt-Anordnung (10) der ersten Spulensektion (4a) der Sekundärspulenanordnung (4) radial innerhalb zumindest eines Teils (13a, 13b) der ersten Spulensektion (4a) der Sekundärspulenanordnung (4) angeordnet ist, und die Shunt-Anordnung der zweiten Spulensektion (4b) der Sekundärspulenanordnung radial außerhalb zumindest eines Teils (13a, 13b) der zweiten Spulensektion (4b) der Sekundärspulenanordnung (4) angeordnet ist.

9. Fehlerstrombegrenzer (1) nach Anspruch 7 oder 8, **dadurch gekennzeichnet, dass** die Shunt-Anordnungen (10) jeweils einen oder mehrere geschlossene Shuntringe (10a) aufweisen.

10. Fehlerstrombegrenzer (1) nach einem der Ansprüche 7 bis 9, **dadurch gekennzeichnet, dass** die Shunt-Anordnungen (10) jeweils eine Vielzahl von metallischen Brücken (11) aufweisen, die die jeweilige Shunt-Anordnung (10) mit der zugeordneten Spulensektion (4a, 4b) der Sekundärspulenanordnung (4) elektrisch leitend verbinden.

11. Fehlerstrombegrenzer (1) nach einem der vorhergehenden Ansprüche, **dadurch gekennzeichnet, dass** die Primärspulenanordnung (2) und die Sekundärspulenanordnung (4) zumindest im Wesentlichen rotationssymmetrisch bezüglich einer Achse (A), insbesondere einer vertikalen Achse (A), aufgebaut sind.

12. Fehlerstrombegrenzer (4) nach einem der vorhergehenden Ansprüche, **dadurch gekennzeichnet, dass** radial innerhalb der ersten Spulensektion (4a) der Sekundärspulenanordnung (4) ein ferromagnetischer Kern (8) angeordnet ist.

13. Fehlerstrombegrenzer (1) nach einem der vorhergehenden Ansprüche, **dadurch gekennzeichnet, dass** die Sekundärspulenanordnung (4) in axialer Richtung sich im Wesentlichen genauso weit erstreckt wie die Primärspulenanordnung (2).

14. Fehlerstrombegrenzer (1) nach einem der vorhergehenden Ansprüche, **dadurch gekennzeichnet, dass** die Sekundärspulenanordnung (4) mit einem Hochtemperatur-Supraleitermaterial, insbesondere YBCO oder BSCCO, gefertigt ist.

15. Fehlerstrombegrenzer (1) nach einem der vorhergehenden Ansprüche, **dadurch gekennzeichnet,**
**dass** die erste und zweite Spulensektion (4a, 4b) der Sekundärspulenanordnung (4) in einem gemeinsamen Kryostaten (5) oder in verschiedenen Kryostaten (5a, 5b) angeordnet sind, und dass die Primärspulenanordnung (2), die erste und zweite Spulensektion (4a, 4b) der Sekundärspulenanordnung (4) und der gemeinsame Kryostat (5) oder die verschiedenen Kryostaten (5a, 5b) so platziert und dimensioniert sind, dass für die Zwischenräume ZR in radialer Richtung zwischen einander gegenüberliegenden Seiten (S2a, S2b, S4a, S4b) der Primärspulenanordnung (2) einerseits und der ersten und zweiten Spulensektionen (4a, 4b) der Sekundärspulenanordnung (4) andererseits gilt: ZR < 1/2D_{P} + 1/2D_{SS}, bevorzugt ZR < 1/2D_{SS},
mit D_{P}: Dicke der den jeweiligen Zwischenraum ZR mit begrenzenden Primärspulenanordnung (2) in radialer Richtung, und D_{SS}: Dicke der den jeweiligen Zwischenraum ZR mit begrenzenden Spulensektion (4a, 4b) der Sekundärspulenanordnung (4) in radialer Richtung.

16. Fehlerstrombegrenzer (1) nach einem der vorhergehenden Ansprüche, **dadurch gekennzeichnet,**
**dass** die Sekundärspulenanordnung (4) N Spulensektionen (4a, 4b, 4c) aufweist, mit N ∈ IN und N ≥ 3, und dass der Fehlerstrombegrenzer (1) N-1 Primärspulenanordnungen (2) aufweist,
wobei jeweils eine Primärspulenanordnung (2) radial zwischen zwei Spulensektionen (4a, 4b, 4c) der Sekundärspulenanordnung (4) angeordnet ist,
insbesondere wobei N=3 oder N=4.

17. Fehlerstrombegrenzer nach Anspruch 16, **dadurch gekennzeichnet, dass** eine Spulensektion (4b) der Sekundärspulenanordnung (4), die radial zwischen zwei Primärspulenanordnungen (2) angeordnet ist, eine Shunt-Anordnung (10) aufweist, die sowohl radial innen als auch radial außen jeweils von einem Teil (13a, 13b) dieser Spulensektion (4b) umgeben ist.

## Claims

1. Inductive fault current limiter (1), comprising:
- a normally conducting primary coil assembly (2) with a multiplicity of turns (3), and
- a superconducting, short-circuited secondary coil assembly (4), wherein the primary coil assembly (2) and the secondary coil assembly (4) are disposed at least substantially coaxially with respect to each other and at least partially interleaved in each other,
the secondary coil assembly (4) comprising a first coil section (4a) and a second coil section (4b),
**characterized in that** the first coil section (4a) of the secondary coil assembly (4) is disposed radially inside the turns (3) of the primary coil assembly (2), and that the second coil section (4b) of the secondary coil assembly (4) is disposed radially outside the turns (3) of the primary coil assembly (2).

2. Fault current limiter (1) according to claim 1, **characterized in that** the primary coil assembly (2) is disposed substantially centrally between an outer side (S4a) of the first coil section (4a) of the secondary coil assembly (4) and an inner side (S4b) of the second coil section (4b) of the secondary coil assembly (4).

3. Fault current limiter (1) according to any one of the preceding claims, **characterized in that** the coil sections (4a, 4b) of the secondary coil assembly (4) each comprise one or more superconducting, ringshaped closed single-turn coils (9).

4. Fault current limiter (1) according to any one of the claims 1 to 3, **characterized in that** the secondary coil assembly (4) comprises a plurality of turns that are distributed substantially evenly among the coil sections (4a, 4b) of the secondary coil assembly (4).

5. Fault current limiter (1) according to any one of the claims 1 to 3, **characterized in that** the secondary coil assembly (4) comprises a plurality of turns that are distributed unevenly among the coil sections (4a, 4b) of the secondary coil assembly (4).

6. Fault current limiter (1) according to any one of the preceding claims, **characterized in that** the secondary coil assembly (4) comprises a plurality of turns, which are distributed unevenly in the coil sections (4a, 4b) of the secondary coil assembly (4) in a radial direction and/or in an axial direction, and/or the coil sections (4a, 4b) of the secondary coil assembly (4) extend different distances in the axial direction.

7. Fault current limiter (1) according to any one of the preceding claims, **characterized in that** the coil sections (4a, 4b) of the secondary coil assembly (4) are each electrically conductively connected to a normally conducting shunt configuration (10).

8. Fault current limiter (1) according to claim 7, **characterized in that** the shunt configuration (10) of the first coil section (4a) of the secondary coil assembly (4) is disposed radially inside at least a part (13a, 13b) of the first coil section (4a) of the secondary coil assembly (4), and the shunt configuration of the second coil section (4b) of the secondary coil assembly is disposed radially outside at least a part (13a, 13b) of the second coil section (4b) of the secondary coil assembly (4).

9. Fault current limiter (1) according to claim 7 or 8, **characterized in that** each shunt configuration (10) has one or more closed shunt rings (10a).

10. Fault current limiter (1) according to any one of the claims 7 to 9, **characterized in that** each shunt configuration (10) has a multiplicity of metallic jumpers (11), which electrically conductively connect the respective shunt configuration (10) to the associated coil section (4a, 4b) of the secondary coil assembly (4).

11. Fault current limiter (1) according to any one of the preceding claims, **characterized in that** the primary coil assembly (2) and the secondary coil assembly (4) are constructed at least substantially rotationally symmetrically with respect to an axis (A), in particular with respect to a vertical axis (A).

12. Fault current limiter (4) according to any one of the preceding claims, **characterized in that** a ferromagnetic core (8) is disposed radially inside the first coil section (4a) of the secondary coil assembly (4).

13. Fault current limiter according to any one of the preceding claims, **characterized in that** the secondary coil assembly (4) extends a substantially same distance in an axial direction as the primary coil assembly (2).

14. Fault current limiter (1) according to any one of the preceding claims, **characterized in that** the secondary coil assembly (4) is made of a high-temperature superconducting material, in particular YBCO or BSCCO.

15. Fault current limiter (1) according to any one of the preceding claims, **characterized in that** the first and second coil sections (4a, 4b) of the secondary coil assembly (4) are disposed in a common cryostat (5) or in different cryostats (5a, 5b), and that the primary coil assembly (2), the first and second coil sections (4a, 4b) of the secondary coil assembly (4) and the common cryostat (5) or the different cryostats (5a, 5b) are positioned and dimensioned such that the following applies for the interstices ZR in a radial direction between mutually opposite sides (S2a, S2b, S4a, S4b) of the primary coil assembly (2) on the one hand and the first and second coil sections (4a, 4b) of the secondary coil assembly (4) on the other hand: ZR<1/2D_{P}+1/2D_{SS}, preferably ZR<1/2D_{SS}, wherein D_{P}: thickness of the primary coil assembly (2) in a radial direction bordering the respective interstice ZR and D_{SS}: thickness of the coil section (4a, 4b) of the secondary coil assembly (4) in a radial direction bordering the respective interstice ZR.

16. Fault current limiter (1) according to any one of the preceding claims, **characterized in that** the secondary coil assembly (4) has N coil sections (4a, 4b, 4c), wherein N ∈ IN and N ≥ 3, and the fault current limiter (1) has N-1 primary coil assemblies (2), wherein one primary coil assembly (2) is disposed radially between two coil sections (4a, 4b, 4c) of the secondary coil assembly (4) in each case, in particular, wherein N=3 or N=4.

17. Fault current limiter according to claim 16, **characterized in that** a coil section (4b) of the secondary coil assembly (4), which is disposed radially between two primary coil assemblies (2), has a shunt configuration (10), which is surrounded both radially inside and radially outside by a part (13a, 13b) of that coil section (4b), respectively.

## Revendications

1. Limiteur de courant de défaut inductif (1), comprenant
- un agencement de bobine primaire (2) normalement conducteur présentant une pluralité de spires (3), et
- un agencement de bobine secondaire (4) supraconducteur en court-circuit, l'agencement de bobine primaire (2) et l'agencement de bobine secondaire (4) étant disposés au moins sensiblement coaxialement l'un à l'autre et étant au moins partiellement emboîtés l'un dans l'autre,
l'agencement de bobine secondaire (4) comprenant une première section de bobine (4a) et une deuxième section de bobine (4b),
**caractérisé en ce que**
la première section de bobine (4a) de l'agencement de bobine secondaire (4) est disposée radialement à l'intérieur des spires (3) de l'agencement de bobine primaire (2),
et que
la deuxième section de bobine (4b) de l'agencement de bobine secondaire (4) est disposée radialement à l'extérieur des spires (3) de l'agencement de bobine primaire (2).

2. Limiteur de courant de défaut (1) selon la revendication 1, **caractérisé en ce que** l'agencement de bobine primaire (2) est disposé de manière sensiblement centrée entre un côté extérieur (S4a) de la première section de bobine (4a) de l'agencement de bobine secondaire (4) et un côté intérieur (S4b) de la deuxième section de bobine (4b) de l'agencement de bobine secondaire (4).

3. Limiteur de courant de défaut (1) selon l'une des revendications précédentes, **caractérisé en ce que** les sections de bobine (4a, 4b) de l'agencement de bobine secondaire (4) comprennent chacune une ou plusieurs bobines à une spire (9) supraconductrices fermées en anneau.

4. Limiteur de courant de défaut (1) selon l'une des revendications 1 à 3, **caractérisé en ce que** l'agencement de bobine secondaire (4) comprend plusieurs spires qui sont réparties sensiblement régulièrement sur les sections de bobine (4a, 4b) de l'agencement de bobine secondaire (4).

5. Limiteur de courant de défaut (1) selon l'une des revendications 1 à 3, **caractérisé en ce que** l'agencement de bobine secondaire (4) comprend plusieurs spires qui sont réparties irrégulièrement sur les sections de bobine (4a, 4b) de l'agencement de bobine secondaire (4).

6. Limiteur de courant de défaut (1) selon l'une des revendications précédentes, **caractérisé en ce**
**que** l'agencement de bobine secondaire (4) comprend plusieurs spires qui sont réparties irrégulièrement en direction radiale et/ou en direction axiale dans les sections de bobine (4a, 4b) de l'agencement de bobine secondaire (4),
et/ou que les sections de bobine (4a, 4b) de l'agencement de bobine secondaire (4) ont des extensions différentes en direction axiale.

7. Limiteur de courant de défaut (1) selon l'une des revendications précédentes, **caractérisé en ce que** les sections de bobine (4a, 4b) de l'agencement de bobine secondaire (4) sont chacune reliées de manière électriquement conductrice à un dispositif de shunt (10) normalement conducteur.

8. Limiteur de courant de défaut (1) selon la revendication 7, **caractérisé en ce que** le dispositif de shunt (10) de la première section de bobine (4a) de l'agencement de bobine secondaire (4) est disposé radialement à l'intérieur d'au moins une partie (13a, 13b) de la première section de bobine (4a) de l'agencement de bobine secondaire (4), et le dispositif de shunt de la deuxième section de bobine (4b) de l'agencement de bobine secondaire est disposé radialement à l'extérieur d'au moins une partie (13a, 13b) de la deuxième section de bobine (4b) de l'agencement de bobine secondaire (4).

9. Limiteur de courant de défaut (1) selon la revendication 7 ou 8, **caractérisé en ce que** les dispositifs de shunt (10) présentent chacun un ou plusieurs bagues shunt fermées (10a).

10. Limiteur de courant de défaut (1) selon l'une des revendications 7 à 9, **caractérisé en ce que** les dispositifs de shunt (10) présentent chacun une pluralité de ponts métalliques (11) qui relient de manière électriquement conductrice le dispositif de shunt (10) respectif à la section de bobine (4a, 4b) associée de l'agencement de bobine secondaire (4).

11. Limiteur de courant de défaut (1) selon l'une des revendications précédentes, **caractérisé en ce que** l'agencement de bobine primaire (2) et l'agencement de bobine secondaire (4) sont au moins sensiblement conçus à symétrie de révolution par rapport à un axe (A), en particulier un axe vertical (A).

12. Limiteur de courant de défaut (4) selon l'une des revendications précédentes, **caractérisé en ce qu'**un noyau ferromagnétique (8) est disposé radialement à l'intérieur de la première section de bobine (4a) de l'agencement de bobine secondaire (4).

13. Limiteur de courant de défaut (1) selon l'une des revendications précédentes, **caractérisé en ce que** l'agencement de bobine secondaire (4) s'étend sensiblement aussi loin en direction axiale que l'agencement de bobine primaire (2).

14. Limiteur de courant de défaut (1) selon l'une des revendications précédentes, **caractérisé en ce que** l'agencement de bobine secondaire (4) est réalisé avec un matériau supraconducteur à haute température, en particulier YBCO ou BSCCO.

15. Limiteur de courant de défaut (1) selon l'une des revendications précédentes, **caractérisé en ce**
**que** la première et la deuxième section de bobine (4a, 4b) de l'agencement de bobine secondaire (4) sont disposées dans un cryostat commun (5) ou dans des cryostats différents (5a, 5b), et que l'agencement de bobine primaire (2), la première et la deuxième section de bobine (4a, 4b) de l'agencement de bobine secondaire (4) et le cryostat commun (5) ou les cryostats différents (5a, 5b) sont placés et dimensionnés de façon qu'il s'applique pour les interstices ZR en direction radiale entre des côtés se faisant face (S2a, S2b, S4a, S4b) de l'agencement de bobine primaire (2) d'une part, et des première et deuxième sections de bobine (4a, 4b) de l'agencement de bobine secondaire (4) d'autre part : ZR < 1/2D_{P} + 1/2D_{SS}, de préférence ZR < 1/2D_{SS},
avec D_{P} : épaisseur en direction radiale de l'agencement de bobine primaire (2) contribuant à délimiter l'interstice ZR respectif, et D_{SS} : épaisseur en direction radiale de la section de bobine (4a, 4b) de l'agencement de bobine secondaire (4) contribuant à délimiter l'interstice ZR.

16. Limiteur de courant de défaut (1) selon l'une des revendications précédentes, **caractérisé en ce**
**que** l'agencement de bobine secondaire (4) présente N sections de bobine (4a, 4b, 4c), avec N ∈ IN et N ≥ 3, et que le limiteur de courant de défaut (1) présente N-1 agencements de bobine primaire (2),
un agencement de bobine primaire (2) étant chaque fois disposé radialement entre deux sections de bobine (4a, 4b, 4c) de l'agencement de bobine secondaire (4),
en particulier avec N=3 ou N=4.

17. Limiteur de courant de défaut selon la revendication 16, **caractérisé en ce qu'**une section de bobine (4b) de l'agencement de bobine secondaire (4) qui est disposée radialement entre deux agencements de bobine primaire (2) présente un dispositif de shunt (10) qui est entouré aussi bien radialement intérieurement que radialement extérieurement par une partie (13a, 13b) de cette section de bobine (4b).
